# EUROPEAN PATENT SPECIFICATION

(11) **EP 1 560 200 B1**
(45) Date of publication and mention of the grant of the patent: **26.11.2008**
(21) Application number: 04001949.9
(22) Date of filing: 29.01.2004
(51) Int. Cl.: G10L 15/22, B60R 16/02, G01C 21/36

(54) **Method and system for spoken dialogue interface**
Verfahren und System zur Sprachdialogschnittstelle
Methode et système d'interface par dialogue vocal

(43) Date of publication of application: 03.08.2005
(73) Proprietor: Harman Becker Automotive Systems GmbH, 76307 Karlsbad (DE); Daimler AG, 70327 Stuttgart (DE)
(72) Inventor: Jeschke, Baerbel, 89077 Ulm (DE); Reh, Frank, 71701 Schwieberdingen (DE)
(74) Representative: Grünecker, Kinkeldey, Stockmair & Schwanhäusser Anwaltssozietät

(56) References cited:
- GB-A- 2 372 864
- US-A1- 2002 067 839
- US-B1- 6 208 932

## Description

### FIELD OF THE PRESENT INVENTION

The invention relates to a method for carrying out a speech dialogue between a speech dialogue system (SDS) and a user for controlling at least one electronic device and relates to a speech dialogue system (SDS) for carrying out a speech dialogue with a user for controlling at least one electronic device.

Speech dialogue systems represent an interface between a human user and a machine or electronic device, whereby the user can control the machine by giving speech commands to the SDS which analyses the speech commands and filters out control commands which in turn are transmitted to the machine or the electronic device. Usually a speech dialogue carried out by such a SDS and a user comprises the steps of outputting requests for acoustic input by the SDS, awaiting a speech input from the user and receiving a speech input from the user. To carry out a full speech dialogue those steps are then repeated as many times as necessary to provide all the control commands the user wants to give to the machine or the electronic device controllable by the SDS. Such SDSs are, for example, used in cars where they offer the user the possibility to control at least some of the electronic devices of his vehicle such as, for example, the radio, the navigation system or the climate control, without him being forced to withdraw his attention from the traffic.

GB-A-2 372 864 discloses a spoken language interface for speech communication comprising an automatic speech recognition system and a session manager for controlling and monitoring user sessions whereby on interruption of a session and subsequent reconnection a user is reconnected at the point in the conversation where the interruption took place. A user is allowed to intentionally suspend a session and return to it at a later point in time and a dialogue manager allows to update or add a dialogue structure without shutting the system down.

US 2002/067839 A1 discloses a wireless voice activation and recognition car system by which units and electronic devices in a car can be controlled on command

US-B-6 208 932 discloses a navigation apparatus for appropriately providing a driver with necessary information, wherein the navigation apparatus selects information having a high priority in accordance with a predetermined priority order and offers the selected information to the driver in the selected order.

SDSs of the known art do however represent the following problem. Following the request for an oral input the SDS prompts the user and awaits an input: If the awaited input is not given by the user because he is otherwise occupied, for example, he has to concentrate on traffic, the SDS stops awaiting a speech input and shuts down the application. Thus the already given information, re-ceived from the user, is lost and the user has to start the application again if he wishes to proceed with his action.

It is therefore the object of this invention to provide a method for carrying out a speech dialogue between a SDS and the user and to provide a SDS wherein the abovementioned problem is overcome and to therefore provide a method for carrying out a speech dialogue and a SDS which are more comfortable.

This object is solved with the method for carrying out a speech dialogue according to claim 1 and a SDS according to claim 12.

With the inventive method it becomes possible to interrupt a speech dialogue at any time and to continue it at a later point in time. The term "continuing" herein means that the speech dialogue is not restarted from the beginning, but that, for example, some of the previously provided speech input from the user is still available to the SDS, e.g. stored in an internal storage means, so that therefore it does not become necessary for the SDS to request all of these inputs prior to the interruption again. Eventually, instead of continuing the user may also request to cancel the started and later on interrupted speech dialogue.

According to a preferred embodiment of the method for carrying out a speech dialogue, the step of continuing the speech dialogue can comprise repeating of a part of the speech dialogue. Actually, the speech dialogue could also be continued exactly at the position where it has been interrupted, but there could also be circumstances for which it would be advantageous to repeat a part of the speech dialogue.

For instance, by repeating a part of the speech dialogue, the user can receive information from the SDS concerning his/her inputs prior to the interruption and thus it becomes easier for him/her to continue the speech dialogue. The SDS can provide the information optically, using e.g. a display, and/or acoustically.

Furthermore, it could be imagined that a speech dialogue is divided into several logical units, like, for example, when the speech dialogue is about inputting an address into a navigation system, the logical units could be, firstly, the city and, secondly, street and street number. For such a speech dialogue, it could be advantageous that after interrupting the speech dialogue, the speech dialogue is continued with the beginning of one of these logical units depending on where the interruption occurred. If, in the given example, in the second logical unit, the street name has already been given but not the number, the speech dialogue could continue with again asking the user the name of the street. By repeating a part of the speech dialogue it therefore becomes easier for the user to continue his input as he does not have to keep in mind all of the details he has input earlier.

According to a further preferred embodiment, the step of continuing the speech dialogue can comprise outputting by the SDS of at least a last output of the SDS prior to interrupting the speech dialogue and/or outputting by the SDS of at least a last speech input received from the user prior to interrupting the speech dialogue and/or awaiting by the SDS of a speech input from the user, in particular, upon receipt of a corresponding command from the user.

By providing this feature, the user is further helped in remembering at which position the speech dialogue was interrupted. The SDS can for example repeat the last request for speech input together with the corresponding received speech input and then proceed with the following request for speech input, or it is also possible that the SDS repeats all of the already provided speech inputs and then repeats the last request or proceeds to the next request for speech input. In yet a further variant, after repeating already provided speech inputs and the last request for speech input, the SDS awaits the corresponding speech input from the user.

In addition the user can request information from the SDS which can help him recalling where the speech dialogue has been interrupted and/or what kind of information he/she has already given.

Thereby, the user-friendliness of the SDS is enhanced, as the SDS provides information about where the speech dialogue has been interrupted and/or what kind of information has already been provided to the SDS by the user.

In a particular advantageous embodiment, the step of continuing the speech dialogue can comprise notifying the user that an interrupted speech dialogue continues. This means that a special continuation output is given by the SDS to the user informing him that in the following an earlier interrupted speech dialogue will be continued. Thus again the user-friendliness of the SDS is enhanced.

In a preferred embodiment, the steps of interrupting and/or continuing the speech dialogue can be carried out upon receipt of a corresponding acoustic or haptic command of the user or upon receipt of a corresponding command of an electronic device by the SDS. Therein, also an electronic device which is eventually not controllable by the SDS could be capable of providing a pause or continuation command for the SDS.

The speech dialogue can thus be interrupted by an electronic device, but on the other hand also by an action from the user. If, for example, the traffic is becoming too dense and therefore a higher attention from the user becomes necessary, then the user can give a speech command such as "pause" or he can activate a control key of the speech dialogue system to also interrupt the dialogue. If he then wants to continue with the interrupted speech dialogue, again a speech command such as "continue" or an activation of a control key of the SDS will lead to the continuation of the speech dialogue. With this high number of possibilities to interrupt or to continue the speech dialogue, the user-friendliness is again enhanced.

According to an advantageous embodiment, the inventive method can further comprise starting a further speech dialogue, in particular for controlling a different electronic device, during interruption of a first speech dialogue. In the abovementioned example where the inputting of a new target location into the navigation system is interrupted by an incoming telephone call, one can imagine that during the telephone conversation the user wants to store a new address or telephone number into his telephone and thus with the inventive method he has the opportunity to store this new address or telephone number using the speech dialogue system, even for the case that there is already a first interrupted speech dialogue. With this possibility, the user therefore does not have to care whether there is already a speech dialogue interrupted.

According to a further preferred embodiment, the step of continuing one of the interrupted speech dialogues can comprise notifying the user of the continued speech dialogue, in particular, by outputting an identifier of the electronic device to be controlled by the speech dialogue. For the case that several speech dialogues have been interrupted and the user continues with one of those speech dialogues it is advantageous that the SDS notifies the user about which speech dialogue is going to be continued. This can for example be done by announcing at least the name of the electronic device which is going to be controlled by the speech dialogue. Thus the user does not need to worry about what kind of speech dialogues are still interrupted and which of the speech dialogues is going to be continued.

In a particular advantageous embodiment, the inventive method can comprise the step of displaying an identifier of the interrupted speech dialogue, in particular, the name of the electronic device to be controlled by the speech dialogue during the interruption of the speech dialogue. The SDS can be connected to a display or the display can be an integral part of the SDS and during interruption of a speech dialogue this display is used to keep the user informed of which speech dialogues are currently interrupted. This again helps the user in knowing which speech dialogues are interrupted and can be continued.

In a variant, the inventive method can comprise interrupting the current operation of the electronic device controllable by the SDS during interruption of the corresponding speech dialogue. In the case that, for example, the user is currently dialoguing with the SDS in order to control a radio and the telephone receives an incoming call and provides a pause command to the SDS, the operation of the radio is also interrupted so that during the telephone call the background noise level can be reduced, thereby further enhancing the user-friendliness.

According to a further embodiment, the inventive method can comprise transmitting control commands to the electronic device controllable by the SDS during interruption of the corresponding speech dialogue. If for example the speech dialogue is used to control a compact disk (CD) exchanger in order to exchange one CD with another CD, and the user decides to interrupt the dialogue after having told the SDS that he wants to switch a CD but before telling which will be the new CD, the SDS can already provide a control command to the electronic device telling the CD player to remove the current CD out of the player back into the magazine and to await the next command concerning the new CD. By doing so, once the user decides to continue with the speech dialogue and tells the system which CD he wants to listen to, the waiting time until he can listen to the new CD can be reduced. This again enhances the user-friendliness of the total system. In another example it could be imagined that during the interruption the electronic device concerned with the speech dialogue can continue downloading information from a distant location, again in order to reduce waiting times.

Advantageously, the step of canceling the speech dialogue can comprise notifying the user that an interrupted speech dialogue has been canceled. This means that a special output is provided by the SDS to the user informing him that the earlier interrupted speech dialogue has been cancelled. Thus again the user-friendliness of the SDS is enhanced.

According to an advantageous embodiment the step of canceling the speech dialogue is carried out upon receipt of a corresponding acoustic or haptic command of the user. Depending on the preferences of the user the canceling can thus be carried out either by voice or by hand.

The invention can also comprise a computer programme product comprising one or more computer readable media having computer executable instructions for performing the steps of the method of one of the previously described claims.

In addition, the invention provides a speech dialogue system (SDS) for carrying out a speech dialogue with a user for controlling at least one electronic device, comprising means for interrupting the speech dialogue, and means for continuing the interrupted speech dialogue. The SDS therefore provides the possibility to interrupt a speech dialogue at any time and to continue it at a later point in time.

In an advantageous embodiment the means for continuing can be configured such that the speech dialogue is continued at a position where it has been interrupted or can be continued by repeating a part of the speech dialogue. With this configuration it does not become necessary to restart from the beginning the speech dialogue but to continue the speech dialogue immediately where it has been interrupted or by repeating a part of the dialogue.

In a preferred embodiment, the means for interrupting the speech dialogue and/or the means for continuing the speech dialogue can comprise a control key. Two additional control keys could be provided one for interrupting and one continuing, or only one additional control key could be provided being configured such that upon a first activation the speech dialogue is interrupted and upon a second activation the interrupted speech dialogue is continued, or it could be that the push to talk (PTT) lever, used to switch on and off the SDS, could in addition be configured as an interrupting and continuation key. Depending on the way the PTT lever is activated either the SDS is turned off or the dialogue is interrupted or continued, wherein different activation could, for example, be activating the key for a long time to turn off the SDS and only for a short time to interrupt or continue the dialogue.

In another preferred embodiment, a means for interrupting the speech dialogue can be configured such that upon receipt of an acoustic pause command the speech dialogue is interrupted and/or wherein the means for continuing the interrupted speech dialogue can be configured such that upon receipt of an acoustic continuation command interrupted speech dialogue is continued. Thus not only a key can be used to interrupt or continue the speech dialogue but also a corresponding speech command further enhancing the user-friendliness of the SDS.

Advantageously, the means for interrupting the speech dialogue can be configured such that upon receipt of a pause command from an electronic device the speech dialogue is interrupted and/or wherein the means for continuing the speech dialogue can be configured such that upon receipt of a continuation command from an electronic device the speech dialogue is continued. Thus not only the user can interrupt a speech dialogue, but also one electronic device which is not necessarily a device which can be controlled by speech dialogue but can be any electronic device somehow connected to the SDS. As an example the user could carry out a speech dialogue to control the navigation system and is inputting a new target address, during this dialogue the telephone receives an incoming call and provides an interruption command to the SDS to interrupt the speech dialogue and which informs the user about the incoming telephone call. Once the telephone call is finished the telephone then provides the continuation command to the SDS so that the interrupted speech dialogue can be continued.

In a variant, the SDS can be configured such that a second speech dialogue is carried out during interruption of a first speech dialogue, the second speech dialogue being, in particular, for controlling a different electronic device. In the abovementioned example where the inputting of a new target location into the navigation system is interrupted by an incoming telephone call, one can imagine that during the telephone conversation the user wants to store a new address or telephone number into his telephone and with this feature he has the opportunity to store the new address or telephone number using the SDS, even for the case that there is already a first interrupted speech dialogue. With this possibility the user therefore does not have to care whether there is already a speech dialogue interrupted.

In a preferred embodiment, the SDS can further comprise storage means for storing speech inputs from a user and the means for continuing can be configured such that when an interrupted speech dialogue is continued at least part of the stored speech inputs are output. With this configuration the SDS can the information or part of the information already input, so that the user will know about the content of the interrupted speech dialogue, thereby improving the user-friendliness of the system.

In an advantageous embodiment, the SDS can be configured such that when an interrupted speech dialogue is continued a message is output informing the user that an interrupted speech dialogue will be continued. With this configuration the SDS recalls to the user that in the following a speech dialogue will be continued and therefore it is not necessary that the user himself has to remember the status of the speech dialogue, thereby further enhancing the user-friendliness of the system.

In a variant the SDS, can be configured such that during an interruption of the speech dialogue an identifier of the interrupted speech dialogue comprising, in particular, the name of the electronic device to be controlled by the interrupted speech dialogue is displayed. It is advantageous that the SDS comprises a displaying means which displays an identifier of the interrupted speech dialogue and eventually also an identifier of an eventually ongoing speech dialogue so that by simply looking at the display the user is aware of which speech dialogues are currently interrupted, thereby further enhancing the user-friendliness of the SDS.

Advantageously the SDS can further comprise a means for canceling the interrupted speech dialogue, wherein the means for canceling comprises, in particular, a control key and/or is configured to cancel the speech dialogue upon receipt of an acoustic cancellation command. Thus in the case the user does not wish to continue the dialogue the SDS provides the possibility to cancel the started and later on interrupted dialogue.

The invention further relates to an information and entertainment system according to claim 24. Accordingly there is provided an information and entertainment system comprising a head unit and at least one electronic device, wherein the head unit comprises means for controlling the at least one electronic device and a speech dialogue system (SDS) according to the above described speech dialogue system and wherein at least one of the at least one electronic device is controllable by the SDS. By providing a SDS according to the invention in an information and entertainment system the user-friendliness of the latter can be greatly enhanced as all of the abovementioned advantages are also incorporated into the information and entertainment system.

The at least one electronic device of the information and entertainment system can comprise at least one of an entertainment device, in particular devices to replay analogue or digital audio signals including a television device, and/or a radio device, and/or a compact cassette playing device, and/or a compact disk playing device, and/or a super audio compact disk playing device, and/or a digital versatile disk playing device, and/or an MPEG audio layer 3 playing device and/or a personal computer, and/or a playing console and/or a telephone, and/or at least one of an information device, in particular a navigation system and/or an onboard computer.

In a preferred embodiment, the head unit can be configured such that a speech dialogue is interrupted upon activation of a predetermined second control key, in particular a pause key of the electronic device to be controlled by the speech dialogue. Therefore not only the control key of the SDS or a speech command can be used to interrupt a speech dialogue, but also the activation of a key of the electronic device which is to be controlled by the speech dialogue. This additional possibility to interrupt speech dialogue again enhances the user-friendliness, as the user may intuitively push the pause button of the electronic device he is controlling by the speech dialogue and thereby can not only interrupt the operation of the electronic device but also the speech dialogue.

In a further variant, the head unit or the at least one electronic device to be controlled by the speech dialogue can be configured such that operation of the electronic device is interrupted when the speech dialogue is interrupted. If for example the speech dialogue is used to control a compact disk (CD) exchanger in order to exchange one CD with another CD, and the user decides to interrupt the dialogue after having told the SDS that he wants to switch a CD but before telling which will be the new CD, the SDS can already provide a control command to the electronic device telling the CD player to remove the current CD out of the player back into the magazine and to await the next command concerning the new CD. By doing so, once the user decides to continue with the speech dialogue and tells the system which CD he wants to listen to, the waiting time until he can listen to the new CD can be reduced. In another example it could be imagined that during the interruption the electronic device concerned with the speech dialogue can continue downloading information from a distant location, again in order to reduce waiting times. This again enhances the user-friendliness of the total system.

According to a variant, the head unit or the at least one electronic device to be controlled by the speech dialogue can be configured such that the at least one electronic device continues to operate even if the speech dialogue is interrupted. In the case that, for example, the user is currently dialoguing with the SDS in order to control a radio and the telephone receives an incoming call and provides a pause command to the SDS the operation of the radio is also interrupted so that during the telephone call the background noise level can be reduced, thereby further enhancing the user-friendliness.

Advantageously the display of the SDS can be a touch screen and the SDS could be configured such that when the screen portion displaying the identification of an interrupted speech dialogue is continued. In addition, the SDS could be configured such that upon touching of another portion of the touch screen an interrupted speech dialogue is cancelled. The touch screen thereby fulfills three roles which are informing the user about which dialogue is ongoing and giving the user the possibility to easily continueone of the interrupted speech dialogues by touching the corresponding display portion and to eventually cancel one or more of the interrupted speech dialogues.

In a further embodiment, the speech dialogue system can further comprise third control keys configured such that each interrupted speech dialogue is attributed to a different third control key and that upon activation of a second control key the corresponding speech dialogue is continued. In combination with the display showing all interrupted and ongoing speech dialogues the third control keys provide an easy way for the user to continue with the speech dialogue he wishes to continue.

The invention further provides a vehicle, in particular a car, with a SDS as previously described. Furthermore the invention also relates to the use of a SDS as previously described in a vehicle, in particular a car.

The invention further provides a vehicle, in particular a car, with an information entertainment system as previously described. Furthermore the invention also relates to the use of an information and entertainment system as previously described, in a vehicle, in particular a car.

In the following examples of the inventive method and the SDS, as well as the information and entertainment system are described with respect to the Figures, wherein:
Fig. 1 shows a dashboard of a vehicle illustrating several electronic devices being controlled by a head unit comprising an embodiment of the speech dialogue system according to this invention,
Fig. 2 shows a block diagram illustrating an embodiment of the SDS according to the invention and which can be part of the head unit,
Fig. 3 shows a functional block diagram illustrating one embodiment of the inventive method for carrying out a speech dialogue, wherein the pause command is provided by a speech input from the user,
Fig. 4 shows a screen displaying interrupted speech dialogues and also shows control keys of the embodiment of a SDS according to the invention.

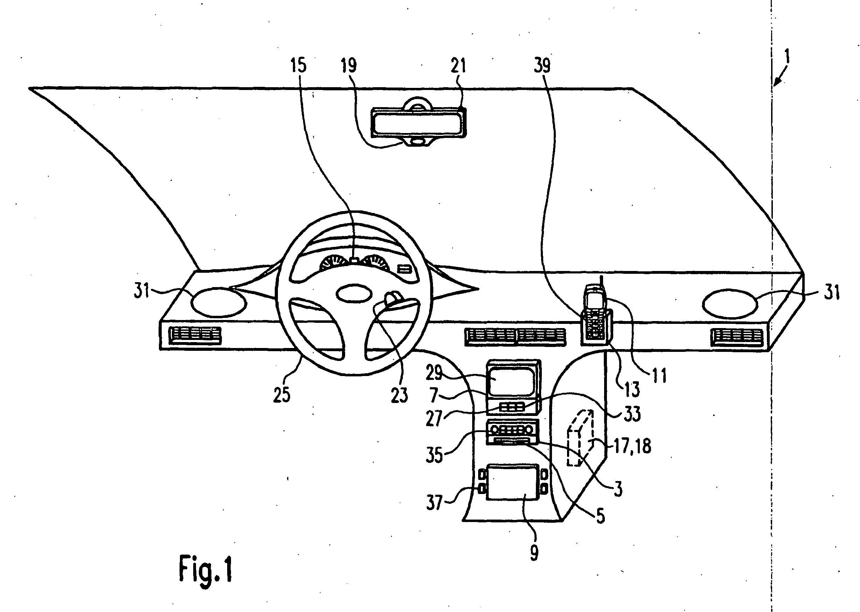

Fig. 1 shows a cockpit of a vehicle comprising an embodiment of the information and entertainment system 1 according to the invention. The information and entertainment system comprises several electronic devices: a radio device 3 comprising eventually also a compact disk (CD) player 5, or as a variant a digital versatile disk (DVD) player or compact cassette (CC) player, a navigation system 7, climate control 9, a telephone which can be a telephone fixed to the vehicle (not shown) or a mobile telephone 11 held by a mobile telephone holder 13 and a board computer 15. The cited electronic devices represent only one possible choice, and other devices, like a television, an internet connecting device or a computer game console may also be part of the information and entertainment system.

The information and entertainment system 1 further comprises a head unit 17 which includes a speech dialogue system (SDS) 18 according to the invention. The head unit 17 is in connection with all of the electronic devices and transmits control commands and/or receives commands from those electronic devices. The SDS 18 of the embodiment comprises as input means a microphone 19 which is arranged in the rear mirror 21 but which of course could also be provided at different locations or at several different locations. It could, for example, be envisaged that there is one microphone 19 in the vicinity of each passenger location.

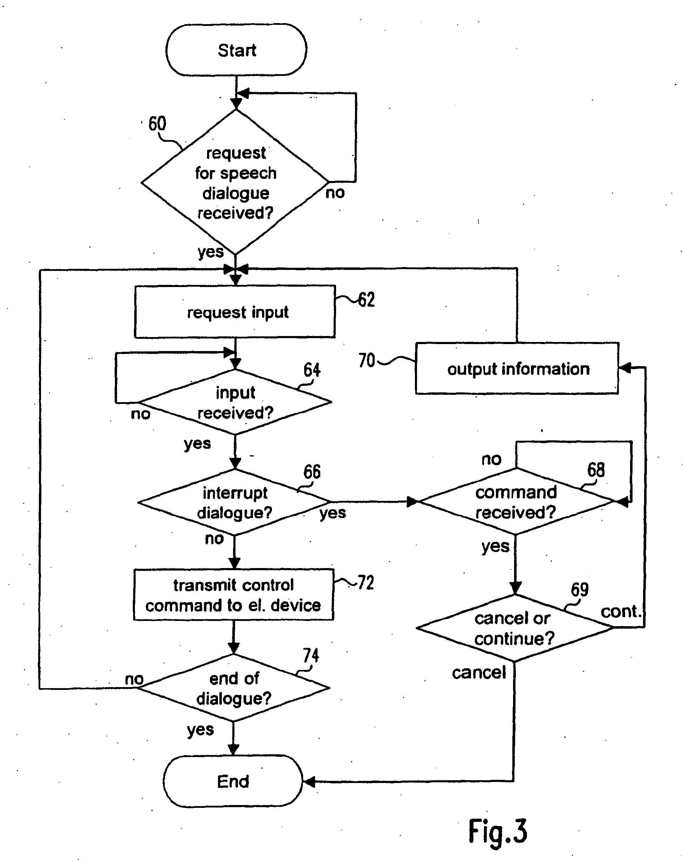

The SDS 18 further comprises control keys 23 which in this embodiment are located on the steering wheel 25, and further control keys 27 located in the vicinity of a multimedia screen 29 which is part of the information entertainment system 17 and serves as an output means for the SDS 18. As further output means, loudspeakers 31 are provided. The electronic devices can be controlled by control keys 33, 35, 37 and 39 controlling, respectively, the navigation system 7, the radio and CD player device 3, the climate control 9, and the mobile telephone or telephone 11. The way the information and entertainment system 1 is controlling the electronic devices using the SDS 18 will be described in detail with respect to Fig. 3 representing one embodiment of the method for carrying out a speech dialogue between a user and the SDS.

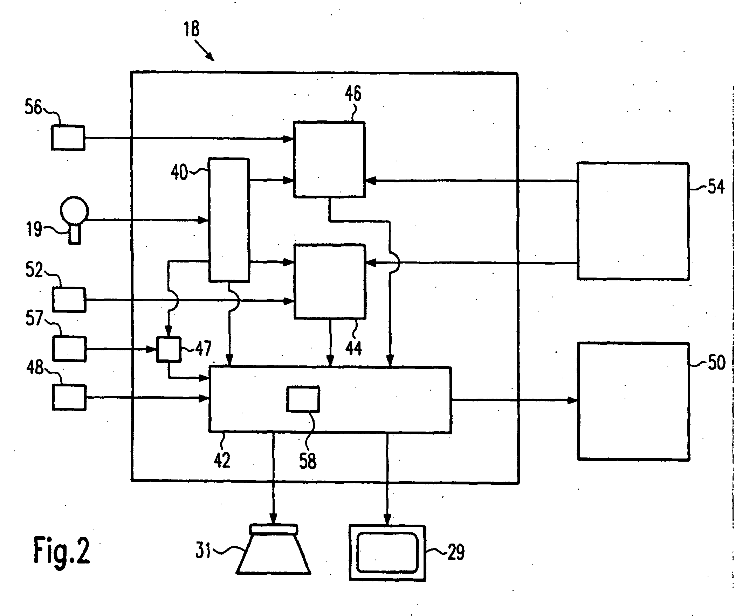

Fig. 2 shows a block diagram representing an embodiment of the SDS 18 according to the invention and which can be part of the information and entertainment system 1. Elements with the same reference numerals as shown in Fig. 1 represent corresponding elements and their properties mentioned in the description of Fig. 1 are incorporated herewith in the description of Fig. 2.

The SDS 18 comprises several elements: a speech analyzing unit 40, a speech dialogue unit 42, a means for interrupting the speech dialogue 44, a means for continuing the interrupted speech dialogue 46 and a means for canceling the interrupted speech dialogue (47).

The speech analyzing unit 40 analyzes the data received by the microphone 19. Analyzing comprises removing background noise and filtering out the speech inputs.

The speech dialogue unit 42 is linked to the speech analyzing unit 40, to the means for interrupting the speech dialogue 44, to the means for continuing the interrupted speech dialogue 46, to the means for canceling the interrupted speech dialogue 47, to a push to talk lever (PTT) 48 which serves to switch on or off the SDS, to the output means 29, 31 and to an electronic device 50.

The speech dialogue unit 42 receives the speech inputs from the speech analyzing unit 40 which are then analyzed and identified as control commands which are transmitted to the electronic device 50, eventually via the head unit 17 (not shown in Fig. 2). Information or requests for speech input are output by the speech dialogue unit 42 to the user via the loudspeakers 31 or the multimedia screen 29.

The means for interrupting the speech dialogue 44 transmits upon receipt of a pause command from either the speech analyzing unit 40, or from a pause control key 52, or from an electronic device 54 a pause signal to the speech dialogue unit 42 which interrupts the speech dialogue.

The means for continuing the interrupted speech dialogue 46 transmits upon receipt of a continuation command from the speech analyzing unit 40, or a continuation control key 56, or from the electronic device 54 a continuation signal to the speech dialogue unit 42 which continues the interrupted speech dialogue.

The means for canceling the interrupted speech dialogue 47 transmits upon receipt of a cancellation command from the speech analyzing unit 40, or a cancellation control key 57 a cancellation signal to the speech dialogue unit 42 to cancel the interrupted speech dialogue.

In a variant the speech dialogue unit 42 may comprise a storage unit 58 for storing received speech inputs from the user.

In the shown embodiment of the SDS 18 four independent control keys 48, 52, 56 and 57 are shown. But in further inventive variants some of the keys could be combined into one key and by the different ways such a key could be activated different functions could be carried out. E.g. the pause command and the continuation command may be provided by one combined control key. Upon a first activation of the combined control key the dialogue is interrupted whereas upon a second activation of the control key the speech dialogue is continued. In yet a further variant, all four control keys 48, 52, 56 and 57 could be combined into one control key wherein depending on the way the key is activated either the on/off function can be carried out or the pause/continue function or the cancellation can be carried out. Moreover, in addition to the shown control keys 48, 52, 56 and 57 also control keys from the electronic devices 3, 5, 7, 9, 11, 13, 15 shown in Fig. 1 could fulfill the role of the pause control key and the continuation control key. In the case of a CD player, for example, the pause key could also play the role of pause control and continuation control key for the speech.

In the shown embodiment, the SDS 18 is controlling only one electronic device 46. However in combination with Fig. 1 it is understood that the SDS 18 can be used to control more than one electronic device (in combination with the head unit 17) and more than one electronic device could provide pause and continuation commands.

In a further variant the speech dialogue unit 42 is configured such that during interruption of a first speech dialogue a second speech dialogue can be started which, in particular, controls a different electronic device.

Fig. 3 shows one embodiment of the inventive method for carrying out speech dialogue between an SDS and a user in order to control an electronic device. The process illustrated in Fig. 3 can be carried out by the SDS 18 as shown in Fig. 2 and/or by the information and entertainment system as described in Fig. 1.

In step 60 it is checked whether a request for a speech dialogue has been given by the user. Thereto the user activates the push to talk lever 48. If a request for speech dialogue has been received by the SDS the process continues with step 62 wherein the SDS 18 requests a speech input from the user. Following step 62 the speech dialogue unit 42 awaits a speech input. Step 64 checks whether a speech input has been received by the speech dialogue unit 42 and if this is the case step 66 checks whether the provided speech input corresponds to a pause command or contains a control command for controlling the electronic device.

For the case that the provided speech input contains a pause command the dialogue is interrupted. The process continues with step 68 during which it is checked whether a command input has been received. During interruption of the speech dialogue the multimedia screen 29 may display an identifier of the interrupted speech dialogue which could, for example, be the name of the electronic device. During the interruption it is furthermore possible (but not shown in Fig. 3) that a second speech dialogue may be started which, in particular, may serve to control a different electronic device.

In a variant, during the interruption of the speech dialogue, the corresponding electronic device may also be interrupted in its operation. Thereto either the head unit 17 or the SDS 18 may provide a corresponding control command to the electronic device leading to the interruption of the operation of the electronic device. In a further variant, it may be that during the interruption of the speech dialogue the SDS 18 transmits control commands to the electronic device such that the electronic device can already carry out operations for which no further instructions from the user are necessary. For example, in the case that the user wants to input a new target location into the navigation system in order to obtain navigation information but interrupts the speech dialogue after he has announced only the city but not yet the street, the navigation system may already calculate the best way to reach that city during the interruption of the speech dialogue or for the case that the navigation system is configured such that it downloads corresponding maps depending on the current location and the final destination from a distantly located server, the navigation system may already download the corresponding map.

If a command has been received in step 68, the process continues with step 69 checking whether a continuation command or a cancellation command has been received. Upon receipt of a cancellation command the process and thus the dialogue ends. Eventually, the SDS outputs a message informing the user that indeed the dialogue has been cancelled.

Upon receipt of a continuation command the process continues with step 70. The continuation command can be either an activation of the continuation key 56 (which is eventually combined with the PTT lever 48, as described above) or a speech command, in the case that the speech analyzing unit 40 constantly analyzes the signals received from the microphone 19 to filter out a continuation command from the user. In step 70 the SDS 18 provides the user with information concerning the speech dialogue which will be continued. In particular the SDS 18 may output, acoustically and/or optically, an identifier of the interrupted speech dialogue and/or output a part of the speech dialogue which has already been carried out prior to the interruption. In particular, the SDS 18 may repeat the content of already provided speech inputs of the user. In a variant this information can also be output on request from the user.

The process then continues with step 62 wherein the last request for input, for which the SDS 18 has not yet received the corresponding speech input from the user, is repeated. Eventually the wording used when the request for input is repeated may be different compared to the wording used for the first time to thereby remind the user that this is a continued speech dialogue. The process then continues with steps 64 and 66, as described above, and in the case that in step 66 the SDS 18 receives a control command the process then proceeds with step 72, wherein the control command is transmits to the electronic device, which can be either directly or via the head unit 17. The control command is then carried out by the electronic device.

In step 74 it is checked whether the end of the dialogue has been reached. If this is not the case the speech dialogue repeats steps 62 to 74 until the end of the dialogue has been reached.

In the above described embodiment of the inventive method for carrying out a speech dialogue, the pause command has been given by the user using a speech command. This pause command can of course also be given using the pause key 52. Using the pause key 52 has the advantage that the described process can be interrupted at any time. Furthermore as described above the speech dialogue may at any time also be interrupted following a pause command received by the SDS 18 from one of the electronic devices and the process could also continue upon receipt of a continuation command from one of the electronic devices.

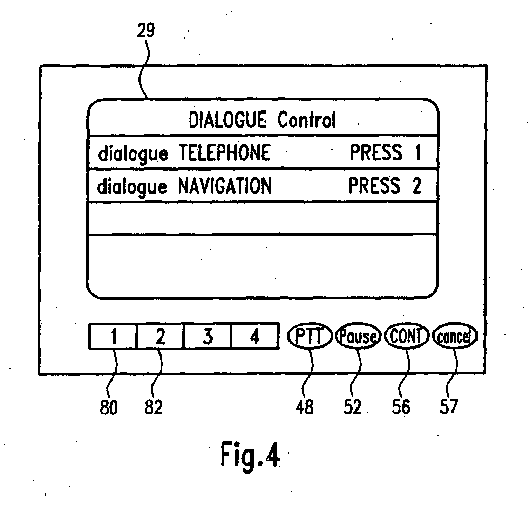

Fig. 4 shows an example of the information that is displayed on the screen 29 during interruption of a speech dialogue. On the screen 29 are displayed two interrupted dialogues, one concerning a telephone call and another concerning the navigation system. Each interrupted speech dialogue is attributed to a control key 80, 82 (being part of the control keys 27). Upon activation of control key 80 the interrupted speech dialogue concerning the telephone call and upon activation of control key 82 the interrupted speech dialogue concerning the navigation system is continued. Furthermore four control keys corresponding to the control keys 48, 52, 56 and 57 described with respect to the description of Fig. 2 are illustrated.

In the following, examples of speech dialogues according to the invention are described.

### Example 1

| | user (voice entry) | SDS (voice output) |
|---|---|---|
| 100 | telephone call | |
| 101 | | please provide number |
| 102 | 0173 | |
| 103 | | 0173 and then? |
| 104 | pause | |
| 105 | | *speech dialogue frozen* |
| 106 | continue | |
| 107 | | dial telephone number |
| 108 | | 0173 and then? |
| 109 | 3994 | |
| 110 | | 3994 |
| 111 | | the number 01733994 will be dialed |

Example 1 concerns a speech dialogue to make a telephone call. Column 1 represents the speech input from the user and column 2 the voice output from the SDS. After having input the area code in step 102 the user requests to interrupt the dialogue in step 104 by saying "pause", of course a haptic pause command could also be performed by the suer. Following this the speech dialogue is interrupted and only continued after the user has provided the continuation command in step 106. In step 107 the SDS then informs the user which speech dialogue was interrupted and furthermore repeats in step 108 the last input given by the user. The user then continues with inputting the rest of the telephone number and finally in step 111 the SDS repeats the number to be dialed and transmits the corresponding control commands to the telephone.

As can be seen from steps 103 and 110, in this speech dialogue the SDS repeats the speech input given from the user.

### Example 2

| | user (voice entry) | SDS (voice output) |
|---|---|---|
| 200 | telephone call | |
| 201 | | please provide number |
| 202 | 0173 | |
| 203 | | 0173 and then? |
| 204 | pause | |
| 205 | | *speech dialogue frozen* |
| 206 | radio control | |
| 207 | | radio control on |
| 208 | volume down by two points | |
| 209 | | volume down by two points |
| 210 | continue and repeat last input | |
| 211 | | dial telephone number |
| 212 | | 0173 and then? |
| 213 | 3994 | |
| 214 | | 3994 |
| 215 | | the number 01733994 will be dialed |

In the second speech dialogue example, steps 200 - 205 and steps 211 - 215 correspond to the first example and will therefore not be further explained in detail. The difference between the two speech dialogues lies in the fact that the user starts a second speech dialogue during the interruption of the first dialogue. In step 206 the user requests to carry out a speech dialogue concerning the radio. In step 208 he requests to change the volume of the radio which is actually carried out in step 209 thereby terminating the second speech dialogue. In step 210 the user then requests to continue with the first interrupted speech dialogue concerning the telephone call and asks the SDS to provide him with the necessary information so that he knows where the first speech dialogue has been interrupted.

### Example 3

| | user (voice entry) | SDS (voice output) | other el. device (e.g. telephone) |
|---|---|---|---|
| 300 | radio control | | |
| 301 | | radio control on | |
| 302 | change radio station | | |
| 303 | | which radio station? | |
| 304 | | | incoming telephone call |
| 305 | | *speech dialogue frozen* | |
| 306 | | | telephone call terminated |
| 307 | | which radio station? | |
| 308 | FM 98.1 | | |
| 309 | | change radio station to FM 98.1 | |

In example 3 the user carries out a speech dialogue in order to change the radio station he is listening to. In step 304 this speech dialogue is interrupted due to an incoming telephone call. Upon receiving the incoming telephone call the telephone sends a pause command to the SDS which in turn interrupts the speech dialogue. As soon as the telephone call is terminated the telephone sends a continuation command to the SDS and in the following the speech dialogue continues (307 - 309).

Eventually an additional step could be present at step 305 wherein the SDS informs the user that the speech dialogue will be interrupted due to the telephone call.

During the interruption of the dialogue the SDS 18 may also transmit a control command to the radio which interrupts the operation of the radio so that the telephone call will not be disturbed by the background noise of the radio.

### Example 4

| | user (voice entry) | SDS (voice output) | SDS (display) |
|---|---|---|---|
| 400 | new target location | | |
| 401 | | please spell the location | |
| 402 | U-L-M | | |
| 403 | | please choose one number from the display | |
| 404 | | | 1. Ulm |
| | | | 2. Ulmen |
| | | | 3. Ulmenhausen |
| 405 | pause | | |
| 406 | | | dialogue Navigation paused |
| 407 | continue | | |
| 408 | | please choose one number from the display | |
| 409 | | | 1. Ulm |
| | | | 2. Ulmen |
| | | | 3. Ulmenhausen |
| 410 | one | | |
| 411 | | new target location Ulm | |

Example 4 describes a speech dialogue between a user and a SDS wherein the SDS does not only have speech output but furthermore also comprises a display. The example deals with an input of a new target location into a navigation system. In step 402 the user enters the first letters of the target location and in the following step 403 the SDS announces that the navigation system has found several locations comprising these letters and that those locations are displayed on the multimedia screen connected to the SDS. Furthermore the user is informed that he can choose one of these locations by announcing the corresponding number. In step 405 the speech dialogue is then interrupted due to a corresponding speech pause command from the user. During the interruption the multimedia screen 29 displays that the navigation speech dialogue has been interrupted. Following the continuation command from the user the SDS repeats the last request for speech input and the screen displays the same choice concerning the locations. The user then chooses one of these locations and the new target location can be input into the navigation system.

In a variant the navigation system may already generate navigation information concerning the three possible locations during the interruption of the speech dialogue. Once the speech dialogue is continued and the user has made his choice, the navigation system can immediately propose the corresponding navigation information which speeds up the application.

In a variant, in all of the above described examples the interrupted speech dialogue may also be cancelled by the user by providing either an acoustic or a haptic cancellation command.

The above-described embodiments concerning the inventive information entertainment system, the inventive SDS 18 and the inventive method have been explained in the context of a vehicular environment. The inventive SDS and the inventive method to carry out a speech dialogue between an SDS and a user can however, also be applied to dialogues between a user and a portable digital assistant (PDA) or in the context of computer-based dialogues via the telephone. In general the speech dialogue according to the invention could be applied for controlling the operation of any electronic device.

## Claims

1. Method for carrying out a Speech dialogue between a speech dialogue system (SDS) (18) and a user for controlling at least one electronic device (3,5,7,9,11,15), comprising the steps of:
interrupting the speech dialogue upon receipt of a predetermined pause command (66) by the SDS (18); and
continuing the speech dialogue upon receipt of a predetermined continuation command (68) by the SDS, (18) **characterised in that** the step of continuing the speech dialogue comprises
outputting by the SDS of at least a last output of the SDS prior to Interrupting the speech dialogue and/or at least a last speech Input received from the user prior to interrupting the speech dialogue; and
subsequently awaiting by the SDS of a speech input from the user.

2. Method according to claim 1, wherein the step of continuing the speech dialogue comprises notifying the user that an interrupted speech dialogue continues.

3. Method according to one of the claims 1 or 2, wherein the steps of interrupting and/or continuing the speech dialogue are carried out upon receipt of a corresponding acoustic or haptic command of the user or upon receipt of a corresponding command of the electronic device (3, 5, 7, 9, 11, 15) by the SDS (18).

4. Method according to one of claims 1 to 3, further comprising starting a further speech dialogue for controlling a different electronic device (3,5,7,9,11,15).

5. Method according to claim 4, wherein continuing one of the interrupted speech dialogues comprises notifying the user of the continued speech dialogue by outputting an identifier of the electronic device (3, 5, 7, 9, 11, 15) to be controlled by the speech dialogue.

6. Method according to one of claims 1 to 5, comprising displaying an identifier of the interrupted speech dialogue.

7. Method according to one of claims 1 to 6, comprising interrupting the current operation of the electronic device (3, 5, 7, 9, 11, 15) controllable by the SDS (18) during interruption of the corresponding speech dialogue.

8. Method according to one of claims 1 to 6, comprising transmitting a control command to the electronic device (3, 5, 7, 9, 11, 15) controllable by the SDS (18) during interruption of the corresponding speech dialogue.

9. Method according to one of claims 1 to 8, further comprising the step of canceling the speech dialogue upon receipt of a predetermined cancellation command (69) by the SDS comprising notifying the user that an interrupted speech dialogue is canceled.

10. Method according to claim 9, wherein the step of canceling the speech dialogue is carried out upon receipt of a corresponding acoustic or haptic command of the user.

11. Computer program product, comprising one or more computer readable media having computer-executable instructions for performing the steps of the method of one of the preceding claims.

12. Speech dialogue system (SDS) (18) for carrying out a speech dialogue with a user for controlling at least one electronic device (3,5,7,9,11,15), comprising:
means for interrupting (44) the speech dialogues and **characterized by**
means for continuing (46) the interrupted speech dialogue configured such that the speech dialogue is continued by
outputting by the SDS of at least a last output of the SDS prior to interrupting the speech dialogue and/or at least a last speech input received from the user prior to interrupting the speech dialogue; and
subsequently awaiting by the SDS of a speech input from the user.

13. Speech dialogue system according to claim 12, wherein the means for interrupting (44) the speech dialogue and/or the means for continuing (46) the speech dialogue comprises a control key (48, 56, 23, 27).

14. Speech dialogue system according to one of claims 12 or 13, wherein the means for interrupting (44) the speech dialogue is configured such that upon receipt of an acoustic pause command, the speech dialogue is interrupted and/or wherein the means for continuing (46) the interrupted speech dialogue is configured such that upon receipt of an acoustic continuation command, the interrupted speech dialogue is continued.

15. Speech dialogue system according to one of claims 12 to 14, wherein the means for interrupting (44) the speech dialogue is configured such that upon receipt of a pause command from an electronic device (3, 5, 7, 9, 11, 15), the speech dialogue is interrupted.

16. Speech dialogue system according to one of claims 12 to 15, configured such that a second speech dialogue is carried out during interruption of a first speech dialogue, the second speech dialogue being for controlling a different electronic device (3,5,7,9,11,15).

17. Speech dialogue system according to one of claims 12 to 16, further comprising storage means (58) for storing speech inputs from a user and wherein the SDS is configured such that when an interrupted speech dialogue is continued, at least part of the stored speech inputs are output.

18. Speech dialogue system according to one of claims 12 to 17, configured such that when an interrupted speech dialogue is continued, a message is output informing the user that an interrupted speech dialogue will be continued.

19. Speech dialogue system according to one of claims 16 to 18, configured such that during interruption of the speech dialogue an identifier of the interrupted speech dialogue is displayed.

20. Speech dialogue system according to one ot claims 12 to 19, further comprising a means for canceling the interrupted speech dialogue (47) wherein the means for canceling (47) comprises a control key (57) and/or is configured to cancel the speech dialogue upon receipt of an acoustic cancellation command.

21. information and entertainment system, comprising a head unit (17) and at least one electronic device (3,5,7,9,11,15), wherein the head unit comprises means for controlling the at least one electronic device (3, 5, 7, 9, 11, 15) and a speech dialogue system (SDS) (18) according to one of claims 12 to 20 and wherein at least one of the at least one electronic device (3, 5, 7, 9, 11, 15) is controllable by the SDS (18).

22. information and entertainment system according to claim 21, wherein the head unit (17) or the at least one electronic device (3, 5, 7, 9, 11, 15) to be controlled by the speech dialogue is configured such that operation of the electronic device (3, 5, 7, 9, 11, 15) is interrupted when the speech dialogue is interrupted.

23. Information and entertainment system according claim 22, wherein the head unit (17) or the at least one electronic device (3, 5, 7, 9, 11, 15) to be controlled by the speech dialogue is configured such that the at least one electronic device (3, 5, 7, 9, 11, 15) continues to operate even if the speech dialogue is interrupted.

## Patentansprüche

1. Verfahren zum Ausführen eines Sprachdialogs zwischen einem Sprachdialogsystem (SDS) (18) und einem Nutzer zum Steuern von zumindest einer elektronischen Vorrichtung (3, 5,7, 9, 11, 15), das die Schritte umfasst:
Unterbrechen des Sprachdialogs nach dem Empfang eines vorbestimmten Pausebefehls (66) durch das SDS (18); und
Fortsetzen des Sprachdialogs nach dem Empfang eines vorbestimmten Fortsetzungsbefehls (68) durch das SDS (18), **dadurch gekennzeichnet, dass** der Schritt des Fortsetzens des Sprachdialogs umfasst
Ausgeben durch das SDS von zumindest einer Ausgabe des SDS vor dem Unterbrechen des Sprachdialogs und/oder zumindest einer letzten Spracheingabe, die von dem Nutzer vor dem Unterbrechen des Sprachdialogs empfangen wurde; und
nachfolgend Warten des SDS auf eine Spracheingabe von dem Nutzer.

2. Verfahren gemäß Anspruch 1, in dem der Schritt des Fortsetzens des Sprachdialogs das Benachrichten des Nutzers darüber, dass ein unterbrochener Sprachdialog fortgesetzt wird, umfasst.

3. Verfahren gemäß einem der Ansprüche 1 oder 2, in dem die Schritte des Unterbrechens und/oder Fortsetzens des Sprachdialogs nach dem Empfang eines entsprechenden akustischen oder haptischen Befehls des Nutzers oder nach dem Empfang einer entsprechenden Anweisung der elektronischen Vorrichtung (3, 5,7, 9, 11, 15) durch das SDS (18) ausgeführt werden.

4. Verfahren gemäß einem der Ansprüche 1 bis 3, das weiterhin das Starten eines weiteren Sprachdialogs zum Steuern einer anderen elektronischen Vorrichtung (3, 5,7, 9,11, 15) umfasst.

5. Verfahren gemäß Anspruch 4, in dem das Fortsetzen eines der unterbrochenen Sprachdialoge das Benachrichten des Nutzers über den fortgesetzten Sprachdialog durch Ausgeben einer Kennung der elektronischen Vorrichtung (3, 5,7, 9,11, 15), die durch den Sprachdialog gesteuert werden soll, umfasst.

6. Verfahren gemäß einem der Ansprüche 1 bis 5, das das Anzeigen einer Kennung des unterbrochenen Sprachdialogs umfasst.

7. Verfahren gemäß einem der Ansprüche 1 bis 6, das das Unterbrechen der gegenwärtigen Operation der elektronischen Vorrichtung (3, 5,7, 9, 11, 15), die durch das SDS (18) steuerbar ist, während einer Unterbrechung des entsprechenden Sprachdialogs umfasst.

8. Verfahren gemäß einem der Ansprüche 1 bis 6, das das Senden einer Steueranweisung an die elektronische Vorrichtung (3, 5,7, 9, 11, 15), die durch das SDS (18) steuerbar ist, während einer Unterbrechung des entsprechenden Sprachdialogs umfasst.

9. Verfahren gemäß einem der Ansprüche 1 bis 8, das weiterhin den Schritt des Beendens des Sprachdialogs nach dem Empfang eines vorbestimmten Beendigungsbefehls (69) durch das SDS, der das Benachrichten des Nutzers darüber, dass ein unterbrochener Sprachdialog beendet wird umfasst, umfasst.

10. Verfahren gemäß Anspruch 9, in dem der Schritt des Beendens des Sprachdialogs nach dem Empfang eines entsprechenden akustischen oder haptischen Befehls des Nutzers ausgeführt wird.

11. Computerprogrammprodukt, das ein oder mehrere computerlesbare Medien umfasst, die computerausführbare Anweisungen zum Ausführen der Schritte des Verfahrens eines der vorhergehenden Ansprüche aufweisen.

12. Sprachdialogsystem (SDS) (18) zum Ausführen eines Sprachdialogs mit einem Nutzer zum Steuern von zumindest einer elektronischen Vorrichtung (3, 5,7, 9, 11, 15), das umfasst:
ein Mittel (44) zum Unterbrechen des Sprachdialogs, und das **gekennzeichnet ist durch**
ein Mittel (46) zum Fortsetzen des unterbrochenen Sprachdialogs, das derart ausgebildet ist, dass der Sprachdialog fortgesetzt wird **durch**
Ausgeben **durch** das SDS von zumindest einer letzten Ausgabe des SDS vor dem Unterbrechen des Sprachdialogs und/oder zumindest einer letzten Spracheingabe, die von dem Nutzer vor dem Unterbrechen des Sprachdialogs empfangen wurde; und
nachfolgend Warten des SDS auf eine Spracheingabe von dem Nutzer.

13. Sprachdialogsystem gemäß Anspruch 12, in dem das Mittel (44) zum Unterbrechen des Sprachdialogs und/oder das Mittel (46) zum Fortsetzen des Sprachdialogs eine Steuertaste (48, 56, 23, 27) umfasst.

14. Sprachdialogsystem gemäß einem der Ansprüche 12 oder 13, in dem das Mittel (44) zum Unterbrechen des Sprachdialogs derart ausgebildet ist, dass nach dem Empfang eines akustischen Pausebefehls der Sprachdialog unterbrochen wird, und/oder das Mittel (46) zum Fortsetzen des unterbrochenen Sprachdialogs derart ausgebildet ist, dass nach dem Empfang eines akustischen Fortsetzungsbefehls der unterbrochene Sprachdialog fortgesetzt wird.

15. Sprachdialogsystem gemäß einem der Ansprüche 12 bis 14, in dem das Mittel (44) zum Unterbrechen des Sprachdialogs derart ausgebildet ist, dass nach dem Empfang eines Pausebefehls von einer elektronischen Vorrichtung (3, 5,7, 9,11, 15) der Sprachdialog unterbrochen wird.

16. Sprachdialogsystem gemäß einem der Ansprüche 12 bis 15, das derart ausgebildet ist, dass ein zweiter Sprachdialog während einer Unterbrechung eines ersten Sprachdialogs ausgeführt wird, wobei der zweite Sprachdialog dem Steuern einer anderen elektronischen Vorrichtung (3, 5,7, 9, 11, 15) dient.

17. Sprachdialogsystem gemäß einem der Ansprüche 12 bis 16, das weiterhin ein Speichermittel (58) zum Speichern von Spracheingaben von einem Nutzer umfasst, und in dem das SDS derart ausgebildet ist, dass zumindest ein Teil der gespeicherten Spracheingaben ausgegeben wird, wenn ein unterbrochener Sprachdialog fortgesetzt wird.

18. Sprachdialogsystem gemäß einem der Ansprüche 12 bis 17, das derart ausgebildet ist, dass eine Nachricht ausgegeben wird, die den Nutzer darüber informiert, dass ein unterbrochener Sprachdialog fortgesetzt wird, wenn ein unterbrochener Sprachdialog fortgesetzt wird.

19. Sprachdialogsystem gemäß einem der Ansprüche 12 bis 18, das derart ausgebildet ist, dass während der Unterbrechung des Sprachdialogs eine Kennung des unterbrochenen Sprachdialogs angezeigt wird.

20. Sprachdialogsystem gemäß einem der Ansprüche 12 bis 19, das weiterhin ein Mittel (47) zum Beenden des unterbrochenen Sprachdialogs umfasst, wobei das Mittel (47) zum Beenden eine Steuertaste (57) umfasst und/oder dazu ausgebildet ist, den Sprachdialog nach dem Empfang eines akustischen Beendigungsbefehls zu beenden.

21. informations- und Unterhaltungssystem, das eine Kopfeinheit (17) und zumindest eine elektronische Vorrichtung (3, 5,7, 9, 11, 15) umfasst, wobei die Kopfeinheit ein Mittel zum Steuern der zumindest einen elektronischen Vorrichtung (3, 5,7, 9, 11, 15) und ein Sprachdialogsystem (SDS) (18) gemäß einem der Ansprüche 12 bis 20 umfasst, und wobei zumindest eine der zumindest einen elektronischen Vorrichtung (3, 5,7, 9, 11, 15) durch das SDS (18) steuerbar ist.

22. Informations- und Unterhaltungssystem gemäß Anspruch 21, in dem die Kopfeinheit (17) oder die zumindest eine elektronische Vorrichtung (3, 5,7, 9, 11, 15), die durch den Sprachdialog gesteuert werden soll, derart ausgebildet ist, dass der Betrieb, der elektronischen Vorrichtung (3, 5,7, 9, 11, 15) unterbrochen wird, wenn der Sprachdialog unterbrochen ist.

23. Informations- und Unterhaltungssystem gemäß Anspruch 22, in dem die Kopfeinheit (17) oder die zumindest eine elektronische Vorrichtung (3, 5,7, 9, 11, 15), die durch den Sprachdialog gesteuert werden soll, derart ausgebildet ist, dass die zumindest eine elektronische Vorrichtung (3, 5,7, 9, 11, 15) den Betrieb fortsetzt, selbst wenn der Sprachdialog unterbrochen wird.

## Revendications

1. Procédé pour effectuer un dialogue vocal entre un système de dialogue vocal (SDS) (18) et un utilisateur pour commander au moins un dispositif électronique (3, 5, 7, 9, 11, 15), comprenant les étapes consistant à:
interrompre le dialogue vocal lors de la réception d'une commande de pause (66) prédéterminée par le SDS (18); et
poursuivre le dialogue vocal lors de la réception d'une commande de poursuite (68) prédéterminée par le SDS (18), **caractérisé en ce que** l'étape de poursuite du dialogue vocal comprend:
la sortie par le SDS d'au moins une dernière sortie du SDS avant d'interrompre le dialogue vocal et/ou au moins une dernière entrée vocale reçue de l'utilisateur avant d'interrompre le dialogue vocal; et
l'attente par la suite, par le SDS, d'une entrée vocale de l'utilisateur.

2. Procédé selon la revendication 1, dans lequel l'étape de poursuite du dialogue vocal comprend la notification à l'utilisateur qu'un dialogue vocal interrompu se poursuit.

3. Procédé selon l'une des revendications 1 ou 2, dans lequel les étapes d'interruption et/ou de poursuite du dialogue vocal sont effectuées lors de la réception d'une commande acoustique ou haptique correspondante de l'utilisateur ou lors de la réception d'une commande correspondante du dispositif électronique (3, 5, 7, 9, 11, 15) par le SDS (18).

4. Procédé selon l'une des revendications 1 à 3, comprenant en outre le commencement d'un autre dialogue vocal pour commander un dispositif électronique (3, 5, 7, 9, 11, 15) différent.

5. Procédé selon la revendication 4, dans lequel la poursuite d'un des dialogues vocaux interrompus comprend la notification à l'utilisateur du dialogue vocal poursuivi en délivrant un identifiant du dispositif électronique (3, 5, 7, 9, 11, 15) à commander par le dialogue vocal.

6. Procédé selon l'une des revendications 1 à 5, comprenant l'affichage d'un identifiant du dialogue vocal interrompu.

7. Procédé selon l'une des revendications 1 à 6, comprenant l'interruption de l'opération actuelle du dispositif électronique (3, 5, 7, 9, 11, 15) pouvant être commandé par le SDS (18) pendant l'interruption du dialogue vocal correspondant.

8. Procédé selon l'une des revendications 1 à 6, comprenant la transmission d'une commande de contrôle au dispositif électronique (3, 5, 7, 9, 11, 15) pouvant être commandé par le SDS (18) pendant l'interruption du dialogue vocal correspondant.

9. Procédé selon l'une des revendications 1 à 8, comprenant en outre l'étape d'annulation du dialogue vocal lors de la réception d'une commande d'annulation (69) prédéterminée par le SDS comprenant la notification à l'utilisateur qu'un dialogue vocal interrompu est annulé.

10. Procédé selon la revendication 9, dans lequel l'étape d'annulation du dialogue vocal est effectuée lors de la réception d'une commande acoustique ou haptique correspondante de l'utilisateur.

11. Produit-programme informatique, comprenant un ou plusieurs supports pouvant être lus par un ordinateur comportant des instructions exécutables par un ordinateur pour effectuer les étapes du procédé selon l'une des revendications précédentes.

12. Système de dialogue vocal (SDS) (18) pour effectuer un dialogue vocal avec un utilisateur pour commander au moins un dispositif électronique (3, 5, 7, 9, 11, 15), comprenant:
des moyens pour interrompre (44) le dialogue vocal, et **caractérisé par**
des moyens pour poursuivre (46) le dialogue vocal interrompu configurés de sorte que le dialogue vocal soit poursuivi par
la sortie par le SDS d'au moins une dernière sortie du SDS avant d'interrompre le dialogue vocal et/ou au moins une dernière entrée vocale reçue de l'utilisateur avant d'interrompre le dialogue vocal; et
l'attente par la suite, par le SDS, d'une entrée vocale de l'utilisateur.

13. Système de dialogue vocal selon la revendication 12, dans lequel les moyens pour interrompre (44) le dialogue vocal et/ou les moyens pour poursuivre (46) le dialogue vocal comprennent une touche de commande (48, 56, 23, 27).

14. Système de dialogue vocal selon l'une des revendications 12 ou 13, dans lequel les moyens pour interrompre (44) le dialogue vocal sont configurés de sorte que, lors de la réception d'une commande de pause acoustique, le dialogue vocal soit interrompu, et/ou dans lequel les moyens pour poursuivre (46) le dialogue vocal interrompu sont configurés de sorte que, lors de la réception d'une commande de poursuite acoustique, le dialogue vocal interrompu soit poursuivi.

15. Système de dialogue vocal selon l'une des revendications 12 à 14, dans lequel les moyens pour interrompre (44) le dialogue vocal sont configurés de sorte que, lors de la réception d'une commande de pause d'un dispositif électronique (3, 5, 7, 9, 11, 15), le dialogue vocal soit interrompu.

16. Système de dialogue vocal selon l'une des revendications 12 à 15, configuré de sorte qu'un deuxième dialogue vocal soit effectué pendant l'interruption d'un premier dialogue vocal, le deuxième dialogue vocal servant à commander un dispositif électronique (3, 5, 7, 9, 11, 15) différent.

17. Système de dialogue vocal selon l'une des revendications 12 à 16, comprenant en outre des moyens de stockage (58) pour stocker des entrées vocales provenant d'un utilisateur, et dans lequel le SDS est configuré de sorte que, lorsqu'un dialogue vocal interrompu est poursuivi, au moins une partie des entrées vocales stockées soient délivrées.

18. Système de dialogue vocal selon l'une des revendications 12 à 17, configuré de sorte que, lorsqu'un dialogue vocal interrompu est poursuivi, un message soit délivré informant l'utilisateur qu'un dialogue vocal interrompu sera poursuivi.

19. Système de dialogue vocal selon l'une des revendications 16 à 18, configuré de sorte que, pendant l'interruption du dialogue vocal, un identifiant du dialogue vocal interrompu soit affiché.

20. Système de dialogue vocal selon l'une des revendications 12 à 19, comprenant en outre des moyens pour annuler le dialogue vocal interrompu (47), dans lequel les moyens pour annuler (47) comprennent une touche de commande (57) et/ou sont configurés pour annuler le dialogue vocal lors de la réception d'une commande d'annulation acoustique.

21. Système d'information et de divertissement, comprenant une unité de tête (17) et au moins un dispositif électronique (3, 5, 7, 9, 11, 15), dans lequel l'unité de tête comprend des moyens pour commander ledit au moins un dispositif électronique (3, 5, 7, 9, 11, 15) et un système de dialogue vocal (SDS) (18) selon l'une des revendications 12 à 20, et dans lequel au moins l'un dudit au moins un dispositif électronique (3, 5, 7, 9, 11, 15) peut être commandé par le SDS (18).

22. Système d'information et de divertissement selon la revendication 21, dans lequel l'unité de tête (17) ou ledit au moins un dispositif électronique (3, 5, 7, 9, 11, 15) à commander par le dialogue vocal est configuré de sorte qu'une opération du dispositif électronique (3, 5, 7, 9, 11, 15) soit interrompue lorsque le dialogue vocal est interrompu.

23. Système d'information et de divertissement selon la revendication 22, dans lequel l'unité de tête (17) ou ledit au moins un dispositif électronique (3, 5, 7, 9, 11, 15) à commander par le dialogue vocal est configuré de sorte que ledit au moins un dispositif électronique (3, 5, 7, 9, 11, 15) continue de fonctionner même si le dialogue vocal est interrompu.
